# EUROPÄISCHE PATENTSCHRIFT

(11) **EP 4 031 729 B1**
(45) Veröffentlichungstag und Bekanntmachung des Hinweises auf die Patenterteilung: **23.08.2023**
(21) Anmeldenummer: 20764088.9
(22) Anmeldetag: 01.09.2020
(51) Int. Cl.: E04G 21/04, B28B 1/00, B28B 1/52, B29C 64/00, B33Y 10/00, B33Y 70/00, B66B 23/00, E04C 3/20, E04C 5/01, E04C 5/02, E04C 5/07, B33Y 30/00

(54) **DRUCKERVORRICHTUNG ZUR ERSTELLUNG EINES BETONTRAGWERKES EINER PERSONENTRANSPORTANLAGE**
PRINTER DEVICE FOR CREATING A CONCRETE SUPPORT OF A PASSENGER TRANSPORT SYSTEM
DISPOSITIF IMPRIMANTE PERMETTANT DE PRODUIRE UNE STRUCTURE DE BÉTON D'UNE INSTALLATION DE TRANSPORT DE PERSONNES

(30) Priorität: 16.09.2019 EP 19197594
(43) Veröffentlichungstag der Anmeldung: 27.07.2022
(73) Patentinhaber: INVENTIO AG, 6052 Hergiswil (CH)
(72) Erfinder: BOROS, Csaba, 92901 Dunajska Streda (SK); WAGENLEITNER, Georg, 4575 Rossleiten (AT)
(74) Vertreter: Inventio AG
(86) Internationale Anmeldenummer: PCT/EP2020/074268
(87) Internationale Veröffentlichungsnummer: WO 2021/052743

(56) Entgegenhaltungen:
- WO-A1-2018/136475
- CN-B- 108 103 952
- JP-A- 2015 217 682
- KR-A- 20180 016 100

## Beschreibung

Die Erfindung betrifft eine Druckervorrichtung zur Erstellung eines Betontragwerkes einer als Fahrtreppe oder Fahrsteig ausgestalteten Personentransportanlage.

Personentransportanlagen, die als Fahrtreppen oder als Fahrsteige ausgestaltet sind, werden in Bauwerken des öffentlichen Bereichs wie beispielsweise in Bahnhöfen, U-Bahnhöfen, Flughäfen sowie in Shoppingmalls, Kulturzentren und dergleichen mehr, eingesetzt. Fahrtreppen oder Fahrsteige weisen eine tragende Struktur auf, die als Tragwerk bezeichnet wird. Meistens ist dieses Tragwerk eine Fachwerkkonstruktion, welche beim Hersteller als ganze Einheit oder in Tragwerkmodule unterteilt, hergestellt wird. Das Tragwerk oder dessen Tragwerkmodule beziehungsweise Fachwerkmodule werden in ein Bauwerk eingebaut, wobei das Tragwerk zum Beispiel zwei Etagen des Bauwerkes verbindet.

In diesem Tragwerk sind die bewegbaren Komponenten der Fahrtreppe oder des Fahrsteiges angeordnet, beispielsweise ein Stufenband oder ein Palettenband, Umlenkachsen, eine Antriebswelle sowie der Antriebsmotor mit Getriebe, dessen Steuerung, Überwachungssysteme, Sicherheitssysteme und dergleichen mehr. Ferner werden auch feststehende Komponenten wie beispielsweise Balustraden, Kammplatten, Lagerstellen, Laufbahnen und Führungsschienen mit dem Tragwerk fest verbunden. Wenn das Tragwerk in Tragwerkmodule unterteilt wird, bedeutet jede dadurch gebildete Trennstelle einen erheblichen Mehraufwand an Material, Fertigungszeit und Montagezeit. Deshalb werden möglichst Trennstellen vermieden oder deren Anzahl möglichst klein gehalten, was dazu führt, dass dieses Bauteil mit seinen sehr grossen Dimensionen vom Herstellungsort zum Einsatzort befördert wird. Dadurch entsteht ein grosses Transportvolumen, welches vergleichsweise hohe Transportkosten verursacht.

Fahrtreppen und Fahrsteige der vorgenannten Art oder deren Module sind deshalb grosse sperrige Teile, die aufgrund ihrer Struktur nicht beliebig zerlegt in ein Bauwerk eingebracht werden können. Wie vorangehend erwähnt, nimmt das Tragwerk sämtliche Bauteile der Fahrtreppe auf und stützt diese an zwei gegeneinander gerichteten Auflagerstellen im Bauwerk ab. Mit anderen Worten bedeutet dies, dass das Tragwerk sich über die gesamte geplante Länge der Personentransportanlage erstreckt.

Bei neu zu erstellenden Bauwerken werden üblicherweise während des Bauvorganges die Fahrtreppen und Fahrsteige, sobald deren bauwerkseitig erstellten Auflagerstellen vorhanden sind, eingesetzt und dann umschliessende Wände und Decken höherer Etagen weitergebaut. Dies deshalb, weil diese Personentransportanlagen aus den vorgenannten Gründen als sehr grosse Bauteile ins Bauwerk eingebaut werden und so gross sind, dass sie nur mit Schwierigkeit durch vorhandene Öffnungen ins Gebäude eingebracht werden könnten.

Bei bestehenden Gebäuden jedoch fehlt diese Möglichkeit, eine grosse Fahrtreppe oder einen grossen Fahrsteig in das Gebäude einzubringen, ohne an der Gebäudehülle, beispielsweise an Wänden, Teile auszubrechen und Öffnungen zu schaffen, um die grossen Bauteile einzuführen. Auch bei U-Bahnstationen kann dieses Problem vorhanden sein, weil dort Tunnel in den Untergrund geschlagen werden und in diesen Tunneln die Fahrtreppen und Fahrsteige installiert werden müssen.

Ein weiteres Problem besteht darin, solche Personentransportanlagen, die im Herstellerwerk komplett zusammengebaut und als Ganzes geliefert werden, zu transportieren. Hierbei müssen grosse Lastwagen eingesetzt werden, wobei das grosse Volumen dieser Anlagen dazu führen kann, dass während des Transportes auch Verkehrswege gesperrt und bestimmte Verkehrsbehinderungen in Kauf genommen werden müssen.

Um die vorangehend aufgeführten Probleme zu vermeiden, werden oft Personentransportanlagen der vorgenannten Art in zerlegtem Zustand in das Bauwerk eingeführt und dort erst zusammengesetzt. Allerdings besteht hier das Problem, dass das üblicherweise als Fachwerk ausgeführte Tragwerk, welches der grösste Teil einer Fahrtreppe oder eines Fahrsteiges darstellt, nicht beliebig zerlegt werden kann. Auch wenn das Tragwerk in zwei oder drei Sektionen zerlegt angeliefert und ins Gebäude verbracht wird, ist es dennoch möglich, dass gewisse Teile des Bauwerkes ausgebrochen werden müssen. Zudem stellt jede Schnittstelle des Tragwerks, an dem die Sektionen zusammengebaut werden, einen erheblichen Mehraufwand dar, da diese besonders verstärkt werden muss, damit die Schnittstelle dieselbe Tragfähigkeit aufweist wie die anderen Teile des Tragwerks. Das Dokument KR 2018 0016100 A offenbart eine Druckervorrichtung mit den Merkmalen des einleitenden Teils des Anspruchs 1.

Aufgrund dieser Probleme kann die Aufgabe der vorliegenden Erfindung darin gesehen werden, Möglichkeiten zu schaffen, ein Tragwerk in ein bestehendes Gebäude oder Bauwerk einzubringen, ohne dass Teile des Gebäudes ausgebrochen werden müssen oder dass das Tragwerk in Sektionen unterteilt ins Gebäude eingebracht werden muss.

Diese Aufgabe wird gelöst durch eine Druckervorrichtung gemäß Anspruch 1 zur Erstellung eines Betontragwerkes einer als Fahrtreppe oder Fahrsteig ausgestalteten Personentransportanlage in einem bestehenden Bauwerk. Hierzu weist die Druckervorrichtung zumindest die nachfolgend aufgeführten Komponenten auf.

Zur Druckervorrichtung gehört eine Druckerführungsvorrichtung, die zwischen zwei zur Abstützung der Personentransportanlage vorgesehenen Auflagerstellen des Bauwerkes angeordnet werden kann. Hierbei ist die Druckerführungsvorrichtung dazu ausgebildet, zumindest während des Druckvorganges an den mit der Personentransportanlage zu verbindenden Etagen des Bauwerkes abzustützen. Mit anderen Worten stützt die Druckerführungsvorrichtung zumindest während der Durchführung des Druckvorganges auf die mit dem Betontragwerk zu verbindenden Etagen des Bauwerkes ab. Vorzugsweise wird dabei die Druckerführungsvorrichtung im Bereich der Auflagerstellen am Bauwerk abgestützt, so dass die beiden Auflagerstellen gewissermassen durch die Druckerführungsvorrichtung überbrückt werden. Dadurch dass die Druckerführungsvorrichtung an den zur Verbindung vorgesehenen Etagen abstützt, kann diese ohne riesigen Aufwand direkt auf die Auflagerstellen ausgerichtet werden, was zu einer hohen Fertigungspräzision des zu erstellenden Betontragwerkes führt.

Des Weiteren umfasst die Druckervorrichtung eine 3D-Betondruckereinrichtung, die entlang der Druckerführungsvorrichtung bewegbar geführt an dieser angeordnet werden kann. Die 3D-Betondruckereinrichtung ist dazu ausgestaltet, verarbeitbaren Beton räumlich anzuordnen. Hierzu weist die 3D-Betondruckereinrichtung zumindest eine Druckerdüse, eine Bewegungsvorrichtung zum Bewegen der Druckerdüse sowie eine Druckersteuerung auf. Durch die Druckersteuerung kann die Bewegungsvorrichtung die Betonzufuhr durch die Druckerdüse sowie die Bewegungen der ganzen 3D-Betondruckereinrichtung entlang der Druckerführungsvorrichtung gesteuert werden. Zur Steuerung dient eine Steuerungssoftware, die zur Durchführung des Druckvorganges während der Erstellung des Betontragwerkes auf der Druckersteuerung ausgeführt werden kann.

Damit die Druckerführungsvorrichtung in unterschiedlichen Bauwerken installiert und verwendet werden kann, weist diese zumindest eine Führungsbahn auf, deren Führungsweg in Bezug auf seine räumliche Einsatzlage zumindest in vertikaler Richtung einstellbar ist. Das bedeutet, dass die Druckerführungsvorrichtung auf die jeweiligen Auflagerstellen eines Bauwerkes eingestellt werden kann, damit ein Führungsweg geschaffen werden kann, der die 3D-Betondruckereinrichtung zwischen den beiden Auflagerstellen sicher und stabil führt.

Wie bereits eingangs erwähnt, ist das Tragwerk der grösste Bauteil der Personentransportanlage. Durch die erfindungsgemässe Vorrichtung kann dieses grösste Teil direkt im Bauwerk erstellt werden. Dadurch lässt sich das Transportvolumen der Personentransportanlage von der Herstellerfabrik zum Bauwerk, in dem die Personentransportanlage eingebaut und betrieben werden soll, stark reduzieren. Zudem wird hierdurch auch ein sogenannter, lokaler Fertigungsteil für heimische Unternehmen erreicht, der bei vielen öffentlichen Vergaben gefordert wird. Alle übrigen Komponenten der Personentransportanlage können dann im erstellten Betontragwerk verbaut werden, was den Lokalfertigungsanteil nochmals erheblich erhöht.

Damit die mindestens eine Führungsbahn stabil angeordnet werden kann, weist die Druckerführungsvorrichtung eine Tragkonstruktion auf, an der die Führungsbahn angeordnet oder ausgebildet ist. Diese Tragkonstruktion kann verschiedene Eigenschaften aufweisen, beispielsweise sollte sie möglichst biegesteif und torsionssteif ausgestaltet sein, damit die 3D-Betondruckereinrichtung stabil geführt werden kann. Ferner kann die Tragkonstruktion über Abstützeinrichtungen verfügen, welche am Bauwerk abgestützt werden können. Zudem können Einstellvorrichtungen vorhanden sein, mittels welchen die Abstützvorrichtungen einstellbar an der Tragkonstruktion angeordnet sind, so dass die Druckerführungsvorrichtung beziehungsweise deren Führungsbahn präzise zu den Auflagerstellen des Bauwerks und gegebenenfalls zu weiteren Bereichen des Bauwerkes wie Böden, Wände und dergleichen mehr, eingestellt werden kann. Die Einstellung der Führungsbahn (53) erfolgt somit im Wesentlichen mittels der Einstellung der Tragkonstruktion (57).

Um Niveauunterschiede zwischen den Auflagerstellen zu berücksichtigen, beziehungsweise die Höheneinstellung zu gewährleisten, umfasst die Tragkonstruktion zumindest zwei seriell miteinander verbundene Abschnitte, deren Mittellängsachsen winklig zueinander einstellbar sind. Die Einstellbarkeit dieser Abschnitte kann auf verschiedene Art und Weise bewirkt werden.

In einer Ausgestaltung der Erfindung kann die Tragkonstruktion auf die beiden Auflagerstellen eingestellt werden, indem eine fixierbare Gelenkstelle jeweils zwischen zwei Abschnitten der Tragkonstruktion angeordnet ist. Durch die Gelenkstelle wird eine Verlagerung des Winkels zwischen den beiden Abschnitten ermöglicht, so dass die Höhe variiert werden kann, indem ein Ende der Tragkonstruktion zum Beispiel auf einer unteren Etage des Bauwerkes und das andere Ende der Tragkonstruktion auf einer höher angeordneten Etage des Bauwerkes abstützt.

Alternativ kann mindestens ein Winkelsegment jeweils zwischen zwei Abschnitten der Tragkonstruktion angeordnet sein, um die gewünschte Winkeleinstellung der Abschnitte zueinander zu bewerkstelligen.

In einer weiteren Ausführung der Erfindung kann die Führungsbahn relativ zur Tragkonstruktion justierbar sein. Dies hat den Vorteil, dass Feinjustierungen nicht über die recht schwerfällige Tragkonstruktion gemacht werden müssen, sondern dass Feineinstellungen an der Führungsbahn relativ zur Tragkonstruktion vorgenommen werden können.

Als Einstellmittel und Feinjustiermittel können einfache Spindeln, aber auch elektromechanische, pneumatische oder hydraulische teil- oder vollautomatisierte Einstell- und Feinjustierantriebe verwendet werden, die mittels einer zugehörenden Steuerung und gegebenenfalls durch Sensoren unterstützt, betrieben werden können.

Wie bereits vorangehend erwähnt, wird die Tragkonstruktion zwischen den beiden Auflagerstellen des Bauwerkes aufgebaut und verbindet gegebenenfalls diese beiden. Die ganze Druckerführungsvorrichtung, die ganze Tragkonstruktion, aber auch nur ein Teil der Tragkonstruktion kann beispielsweise auch als Bewehrung oder Teil der Bewehrung vorgesehen sein. Das bedeutet, dass zumindest ein Teil der Druckerführungsvorrichtung während des Druckvorganges mit Beton umgeben wird und dann im fertigen Betontragwerk verbleibt.

Hierbei kann der im Betontragwerk verbleibende Teil der Druckerfuhrungsvorrichtung mindestens eine Anschlussstelle zur Aufnahme von weiterem Bewehrungsmaterial aufweisen, wodurch das weitere Bewehrungsmaterial mit der Tragkonstruktion fest verbunden werden kann.

Die Tragkonstruktion bzw. die Druckerführungsvorrichtung kann zumindest an einem ihrer beiden Enden Aufnahmevorrichtungen für Lagerbauteile aufweisen. Diese Lagerbauteile dienen dazu, eine geeignete Lagerung des fertigen Betontragwerkes gegenüber dem Bauwerk sicherzustellen. Dies ist insbesondere bei Fahrtreppen oder Fahrsteigen wichtig, welche zum Einsatz in Bauwerken vorgesehen sind, die in seismisch aktiven Gebieten stehen oder errichtet werden. Die in Erdbebengebieten errichteten Bauwerke unterliegen speziellen Bauvorschriften und sind für diese Belastungen speziell ausgebildet. Um Schäden zu vermeiden, können bei Erdbeben deshalb zwischen einzelnen Etagen des Bauwerkes Bewegungen relativ zueinander erfolgen. Das bedeutet, dass bei einem starren Einbau des Tragwerkes dieses zerrissen würde, wenn solche Bewegungen stattfinden. Um dies zu vermeiden, werden Fahrtreppen oder Fahrsteigen so in den Auflagerstellen verankert, dass sie Relativbewegungen an der jeweiligen Auflagerstelle zulassen. Üblicherweise ist eines dieser Lager an der einen Auflagerstelle als Schwenklager und an der anderen, gegenüberliegenden Auflagerstelle als Gleitlager aufgebaut. Die Lagerbauteile können durch den Druckvorgang zwischen dem Betontragwerk und der jeweiligen Auflagerstelle in das Betontragwerk integriert werden. Das Schwenklager kann so ausgebildet sein, dass es Schwenkbewegungen der Personentransportanlage um eine vertikale Achse ermöglicht. Das Gleitlager an der anderen Auflagerstelle stützt die Personentransportanlage an diesem Ende nur gegen vertikale Kräfte ab, hingegen kann es sich dort in horizontaler Ebene in allen Richtungen bewegen.

In einer weiteren Ausgestaltung der Erfindung ist die Aufnahmevorrichtung zur Aufnahme der Lagerbauteile relativ zur Tragkonstruktion bewegbar und an dieser feststellbar angeordnet. Dadurch können die darin aufgenommenen Lagerbauteile auf die jeweilige Auflagerstelle ausgerichtet werden.

Mittels der vorangehend beschriebenen Druckervorrichtung kann ein Verfahren zur Erstellung eines Betontragwerkes einer als Fahrtreppe oder Fahrsteig ausgestalteten Personentransportanlage durchgeführt werden. Hierbei wird in einem bestehenden Bauwerk eine Druckervorrichtung zum dreidimensionalen Betondrucken eingebracht. Das Einbringen der Druckervorrichtung geschieht dadurch, dass zwischen zwei zur Abstützung der Personentransportanlage vorgesehenen Auflagerstellen des Bauwerkes, eine Druckerführungsvorrichtung der Druckervorrichtung angeordnet wird. Mit dieser Druckerführungsvorrichtung wird eine 3D-Betondruckereinrichtung verbunden, welche entlang dieser Druckerführungsvorrichtung zwischen den beiden Auflagerstellen verschiebbar geführt ist. Sobald die Druckervorrichtung aufgestellt und installiert ist, kann mit dieser durch einen Druckvorgang ein Betontragwerk erstellt werden, welches sich zwischen den beiden Auflagerstellen erstreckt.

Wie bereits erwähnt, kann zumindest ein Teil der Druckerführungsvorrichtung als Bewehrung oder Teil der Bewehrung im Betontragwerk verbleiben, indem diese vor dem Druckvorgang auf den Auflagerstellen des Bauwerkes angeordnet wird und der verbleibende Teil dieser Druckerführungsvorrichtung durch den Druckvorgang im Betontragwerk eingelassen wird. Dies bedeutet, dass beispielsweise die gesamte Druckerführungsvorrichtung die gesamte Bewehrung oder einen Teil der Bewehrung des Betontragwerkes bilden kann. Es kann aber auch sein, dass nur ein Teil der Druckerführungsvorrichtung als Bewehrung vom Beton während des Druckvorganges eingeschlossen wird und nur dieser eingeschlossene Teil als Bewehrung des Betontragwerkes dient. Der Rest der Druckerführungsvorrichtung wird in diesem Fall von den eingeschlossenen Teilen der Druckerführungsvorrichtung nach dem Druck getrennt und kann gegebenenfalls für einen weiteren Druckvorgang wiederverwendet werden.

Es kann aber auch sein, dass gar kein Teil der Druckerführungsvorrichtung im Betontragwerk eingeschlossen wird und diese lediglich dazu dient, die 3D-Betondruckereinrichtung zwischen den beiden Auflagerstellen zu führen. Mit anderen Worten kann die Druckerführungsvorrichtung der Druckervorrichtung nur temporär zwischen den Auflagerstellen verbleiben, indem diese vor dem Druckvorgang beim Anordnen im Bauwerk auf die Auflagerstellen ausgerichtet wird und nach dem Druckvorgang wieder entfernt wird.

Wie bereits erwähnt, können gegebenenfalls unter Einbezug von Lagerbauteilen an einer der beiden Auflagerstellen ein Schwenklager und an der anderen Auflagerstelle ein Gleitlager während des Druckvorganges am Betontragwerk ausgebildet werden. Dabei sind aber nicht zwingend weitere Bauteile zum Beispiel aus Stahl notwendig. Je nach Druckerprogramm, je nach Betonqualität und je nach vorgegebenem Bewehrungsplan kann das Schwenklager sowie das Gleitlager rein durch den Druckvorgang und das Einbringen allfälliger Bewehrung in den Auflagerstellen erzeugt werden.

Vorzugsweise wird durch das Verfahren ein Betontragwerk erzeugt, welches quer zu seiner Längserstreckung einen nach oben offenen U-förmigen Querschnitt aufweist. Mit anderen Worten weist ein solches Betontragwerk zwei Seitenwände auf, welche durch einen Boden miteinander verbunden sind. Durch den Druckvorgang können zum Beispiel in den Seitenwänden Führungselemente ausgebildet werden, welche zur Führung bewegter Bauteile der Personentransportanlage dienen. Ebenso können Aufnahmen für Bauteile der Personentransportanlage mitgedruckt werden, wobei in diese Aufnahmen mindestens ein Befestigungselement, vorzugsweise aus Metall oder aus einem Polymerwerkstoff, während des Druckens eingelassen werden kann. Dieses Befestigungselement kann ein Bolzen, ein Gewindebolzen, eine Lasche, ein Hebel, eine Stange, ein Anker und dergleichen mehr sein.

Sofern die Druckervorrichtung über eine Bewehrungszuführvorrichtung verfügt, kann während des Druckvorganges Bewehrungsmaterial durch diese zugeführt werden. Dieses Bewehrungsmaterial können beispielsweise Bewehrungsfasern aus Stahl oder Kunststoff sein. Es können aber auch Drähte sein, welche in geeigneter Weise in das Betonmaterial gesteuert eingebracht werden. Hierzu folgt vorzugsweise die Bewehrungszuführvorrichtung einem Bewehrungsplan, welcher in der Steuerungssoftware implementiert ist.

Sobald das Betontragwerk der Personentransportanlage durch die Druckervorrichtung erstellt worden ist, kann die Druckervorrichtung abgebaut werden und nach einer entsprechenden Verfestigungszeit, kann das Betontragwerk mit den weiteren Bauteilen der Personentransportanlage zur fertigen, einsatzbereiten, als Fahrtreppe oder Fahrsteig ausgestalteten Personentransportanlage ergänzt werden.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Es zeigen:
- Figur 1:: schematisch eine erfindungsgemässe Druckervorrichtung mit einer Druckerführungsvorrichtung, einer 3D-Betondruckeinrichtung und einer Bewehrungszufuhrvorrichtung;
- Figur 2:: schematisch einen Abschnitt eines Betontragwerkes während des Druckvorganges mit einer Druckervorrichtung;
- Figur 3:: schematisch eine Druckerführungsvorrichtung mit damit verbindbarer 3D-Betondruckeinrichtung;
- Figur 4:: schematisch einen Abschnitt eines Betontragwerkes mit als Bewehrung dienenden Drähten, welche durch eine Bewehrungszufiihrvorrichtung der Druckervorrichtung entsprechend einem Bewehrungsplan in die Betonmasse eingebracht wurden;
- Figur 5:: schematisch eine mögliche Ausgestaltung einer Düse mit einer Bewehrungszuführvorrichtung, welche Bewehrungsdrähte durch die Düse zuführt;
- Figur 6:: schematisch eine Ergänzung der in der Figur 5 dargestellten Bewehrungszuführvorrichtung, so dass nicht nur in Längserstreckung des Betontragwerkes Bewehrungsdrähte zugeführt werden können, sondern auch diese in Längserstreckung in der verarbeiteten Betonmasse angelegten Bewehrungsdrähte mit weiteren Bewehrungsdrähten in Querrichtung miteinander verbinden kann.

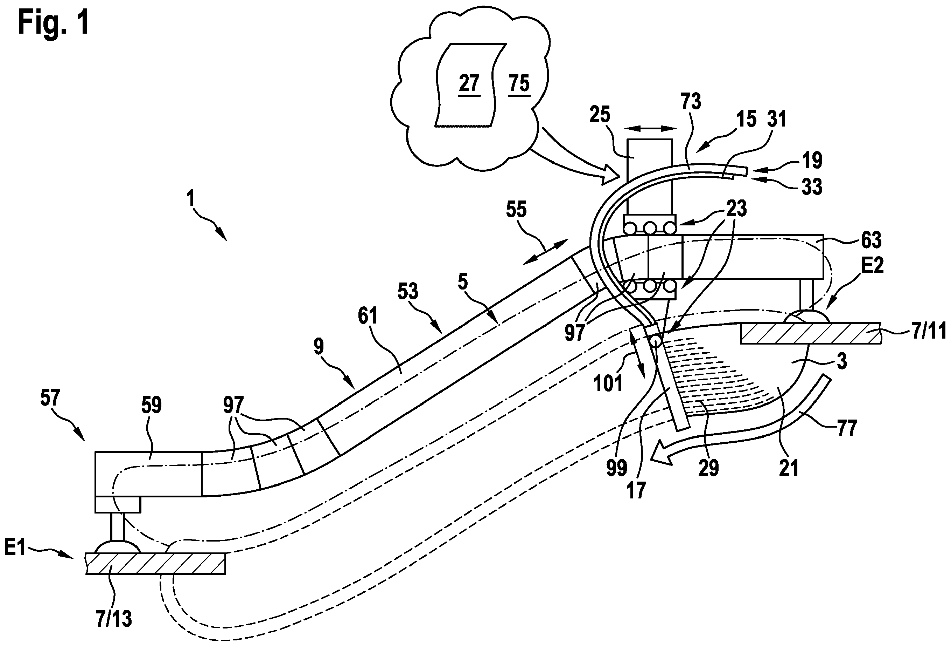

In der Figur 1 ist eine erfindungsgemässe Druckervorrichtung 1 mit einer Druckerführungsvorrichtung 9, einer 3D-Betondruckeinrichtung 15 und einer Bewehrungszufuhrvorrichtung 31 schematisch dargestellt. Des Weiteren zeigt die Figur 1 zwei auf unterschiedlichen Ebenen angeordnete Etagen E1, E2 eines Bauwerkes 7, welche durch eine Personentransportanlage 5 miteinander verbunden werden sollen. Diese Personentransportanlage 5 ist, weil sie noch nicht erstellt wurde, mittels strichpunktierter Linie dargestellt. Um diese Personentransportanlage 5 zu erstellen, muss zwischen diesen beiden Etagen E1, E2 eine tragende Konstruktion eingebracht werden. Als tragende Konstruktion ist ein Betontragwerk 3 vorgesehen.

Um dieses Betontragwerk 3 gegen die Schwerkraft im Bauwerk 7 abzustützen, sind zwei Auflagerstellen 11, 13 vorhanden, welche bauseitig auf den übereinander angeordneten Etagen E1, E2 des Bauwerkes 7 ausgebildet sind. Wie die Figur 1 zeigt, wird zur Erstellung des Betontragwerkes 3 der Personentransportanlage 5 die Druckerführungsvorrichtung 9 zwischen den beiden Etagen E1, E2 bzw. zwischen der Auflagerstelle 11 der oberen Etage E2 und der Auflagerstelle 13 der unteren Etage E1 angeordnet.

Die Druckerführungsvorrichtung 9 weist eine Tragkonstruktion 57 auf, an welcher zumindest eine Führungsbahn 53 ausgebildet ist. Die Form der Tragkonstruktion 57 in der dargestellten Seitenansicht der Figur 1, gibt annähernd den späteren Verlauf der Längserstreckung des Betontragwerkes 3 wieder. Die Tragkonstruktion 57 weist hierzu einen ersten Abschnitt 59, einen zweiten Abschnitt 61 und einen dritten Abschnitt 63 auf, die in ihrer Längserstreckung gerade ausgebildet sind und die mittels Winkelsegmenten 97 miteinander verbunden werden können. Je nach Anzahl verwendeter Winkelsegmente 97, können die seriell miteinander verbundenen Abschnitte 59, 61, 63 beziehungsweise deren nicht dargestellte Mittellängsachsen, winklig zueinander eingestellt werden. Mit anderen Worten sind durch die Anzahl verwendeter Winkelsegmente 97, verschiedene Steigungen des zweiten Abschnitts 61 einstellbar. Zur Feinjustierung der Führungsbahn 53 können beispielsweise leicht keilförmige, nicht dargestellte Zwischeneinlagen verwendet werden, die eine leichte Korrektur der Führungsbahn 53 relativ zu den übrigen Teilen der Tragkonstruktion 57 ermöglichen.

Wie bereits erwähnt, umfasst die Druckervorrichtung 1 auch eine 3D-Betondruckereinrichtung 15, welche an der Druckerführungsvorrichtung 9 entlang eines Führungsweges 55 verschiebbar geführt ist. Die 3D-Betondruckereinrichtung 15 kann hierbei mittels einer Bewegungsvorrichtung 23 entlang des Führungsweges 53 bewegt werden.

Die 3D-Betondruckereinrichtung 15 verfügt ferner über eine Druckerdüse 17. Die Druckerdüse 17 kann mit einer Betonfördereinrichtung 73 verbunden werden, durch welche Betonfördereinrichtung 73 verarbeitbarer Beton 19 der Druckerdüse 17 zugeführt werden kann. Von dieser Betonfördereinrichtung 73 ist nur der Schlauch dargestellt, welcher üblicherweise mit einem Transportgefährt, beispielsweise einem Lastwagen, verbunden ist, der den frischen Beton an die Baustelle transportiert hat. Auch die Druckerdüse 17 wird mittels der Bewegungsvorrichtung 23 beweglich am Rest der 3D-Betondruckereinrichtung 15 geführt, symbolisch dargestellt durch den Doppelpfeil 101 und den Schwenkmechanismus 99.

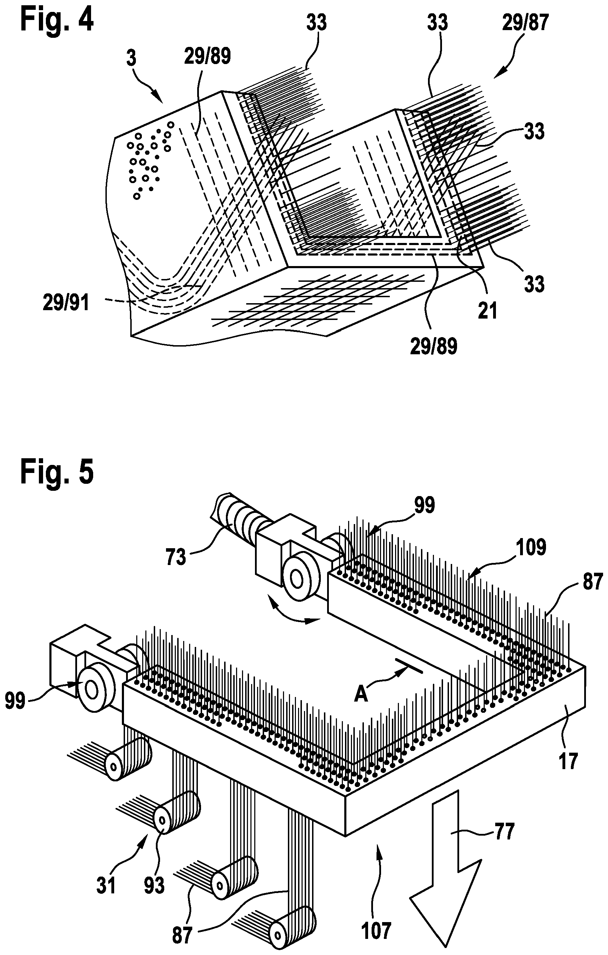

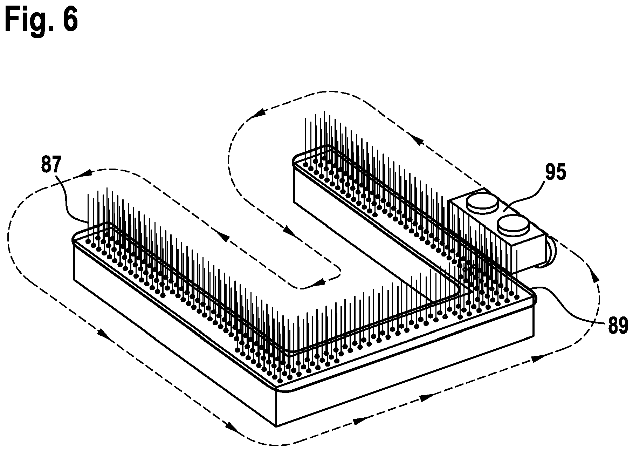

Mit der Druckerdüse 17 ist zudem die Bewehrungszuführvorrichtung 31 verbunden, so dass dieser Bewehrungsteile 33 zugeführt werden können. Die dargestellte Druckerdüse 17 wird weiter unten im Zusammenhang mit den Figuren 5 und 6 noch detaillierter beschrieben.

Zur Koordinierung der für den Druckvorgang erforderlichen Bewegungen der Bewegungsvorrichtung 23, weist die Druckervorrichtung 1 eine Druckersteuerung 25 auf. Die Druckersteuerung 25 führt dabei Steuerbefehle aus, welche in einer Steuerungssoftware 27 implementiert sind. Diese Steuerungssoftware 27 kann beispielsweise aus einer Datenwolke (Cloud) 75 heruntergeladen werden. Die Steuerungssoftware 27 enthält hierbei sämtliche Bewegungsabläufe sowohl der 3D-Druckervorrichtung 15 relativ zur Druckerführungsvorrichtung 9 als auch der Druckerdüse 17 relativ zum Rest der 3D-Druckervorrichtung 15. Ferner steuert die Druckersteuerung 25 gemäss der Steuerungssoftware 27 die Zufuhr von verarbeitbarem Beton 19 und von Bewehrungsmaterial 33 zur Druckerdüse 17.

Wie in der Figur 1 dargestellt, ist die Druckervorrichtung 1 mitten im Verfahren zur Erstellung des Betontragwerkes 3. Hierbei ist der bereits erstellte Teil des Betontragwerkes 3 mit ausgezogener Linie dargestellt, während der noch nicht erstellte Teil des Betontragwerkes 3 mit unterbrochener Linie dargestellt ist. Der bereits erstellte Teil des Betontragwerkes 3 zeigt den bereits verarbeiteten Beton 21 sowie die andeutungsweise dargestellte, bereits verbaute Bewehrung 29, welche gemäss dem bereits erfolgten Druckvorgang 77 eingebracht wurde.

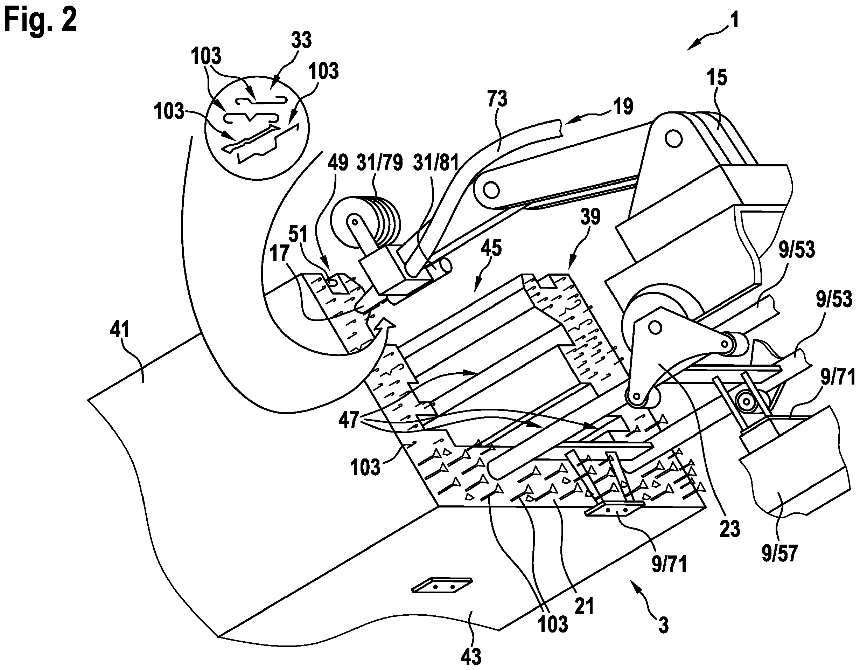

Die Figur 2 zeigt eine alternative Ausgestaltung der Druckervorrichtung 1. Deren Druckerführungsvorrichtung 9 weist eine Tragkonstruktion 57 sowie zwei Führungsbahnen 53 auf, welche über Verbindungsstellen 71 mit der Tragkonstruktion 57 verbunden sind.

An den Führungsbahnen 53 ist durch eine Bewegungsvorrichtung eine 3D-Betondruckereinrichtung 15 entlang den Führungsbahnen beweglich geführt angeordnet. Die 3D-Betondruckereinrichtung 15 ist ein umgebauter Industrieroboter, welcher mit weiteren Teilen versehen ist. Diese weiteren Teile sind eine Druckerdüse 17 sowie eine Bewehrungszuführvorrichtung 31. Die Druckerdüse 17 ist wiederum mit einer Betonfördereinrichtung 73 verbunden.

Anders als im vorangehenden Beispiel der Figur 1, wird im Beispiel der Figur 2 das Bewehrungsmaterial 33 nicht in Form von Bewehrungsdrähten, sondern in Form von Bewehrungsfasern 103 in den verarbeitbaren Beton19 eingebracht. Das Bewehrungsmaterial 33 in Form von Bewehrungsfasern 103 wird in der Bewehrungszuführvorrichtung 31 aus Halbzeugmaterial 79 fortlaufend gefertigt. Im vorliegenden Ausführungsbeispiel liegt das Halbzeugmaterial 79 als Draht aufgewickelt auf einer Drahtrolle vor, welches durch die Bewehrungszuführvorrichtung 31 in geeignete Länge und geeignete Form gebracht wird. Wie dargestellt, können die Bewehrungsfasern 103 verschiedene Formen annehmen. Dies hat den Vorteil, dass je nach Einsatzort die Form und Länge der Bewehrungsfasern 103 variiert werden kann. Nach dem Ablängungs- und Verformungsprozess des Bewehrungsmaterials 33 wird dieses einer Schiessvorrichtung 81 der Bewehrungszuführvorrichtung 31 zugeführt und diese am richtigen Ort und mit der richtigen Schussenergie in den noch weichen, von der Düse aufgetragenen beziehungsweise verarbeiteten Beton 21, eingebracht. Sowohl die Bewegungsvorrichtung 23 als auch die 3D-Druckervorrichtung 15 und die Bewehrungszuführvorrichtung 31 werden wiederum durch eine nicht dargestellte Druckersteuerung sowie die zugehörende Steuerungssoftware gesteuert.

Der bereits durch die Druckervorrichtung 1 erzeugte Teil des Betontragwerkes 3 weist einen U-förmigen Querschnitt 45 auf. Dieser wird gebildet durch zwei Seitenwände 41, 39, die durch einen Boden 43 miteinander verbunden sind. Wie deutlich ersichtlich ist, werden die beiden Führungsbahnen 53 der Druckerführungsvorrichtung 9 durch den Druckvorgang mit eingeschlossen. Nach der kompletten Erstellung des Betontragwerkes 3, kann der Rest der Druckerführungsvorrichtung 9, nämlich die Tragkonstruktion 57, durch die Trennung der Verbindungsstellen 71 vom Betontragwerk 3 gelöst werden. Somit ist ein Teil der Druckerführungsvorrichtung 9 Teil des Bewehrungsmaterials 33 des fertig erstellten Betontragwerkes 3.

Ein besonderer Vorteil des Druckens des Betontragwerkes 3 besteht darin, dass vorteilhafte Ausgestaltungen des Betontragwerkes 3 gleich mitgedruckt werden können. Einerseits können dies freie Aussenformen des Bodens 43 und der Seitenwände 39, 41 sein, die nach den Wünschen des Architekten frei formbar sind. Zum anderen können wie im vorliegenden Ausführungsbeispiel der Figur 2 dargestellt, durch den Druckvorgang funktionsrelevante Konturen wie beispielsweise die dargestellten Führungselemente 74 mitgedruckt werden. Diese Führungselemente 47 dienen als Führungsschienen für das innerhalb des Betontragwerkes 3 beweglich anzuordnende Stufenband oder Palettenband (nicht dargestellt) der Personentransportanlage 5. Ferner können auch Aufnahmen 49 mitgedruckt werden. In diese Aufnahmen 49 können Befestigungselemente 51 eingelassen sein, an welchen weitere Bauteile der Personentransportanlage 3 befestigt werden können.

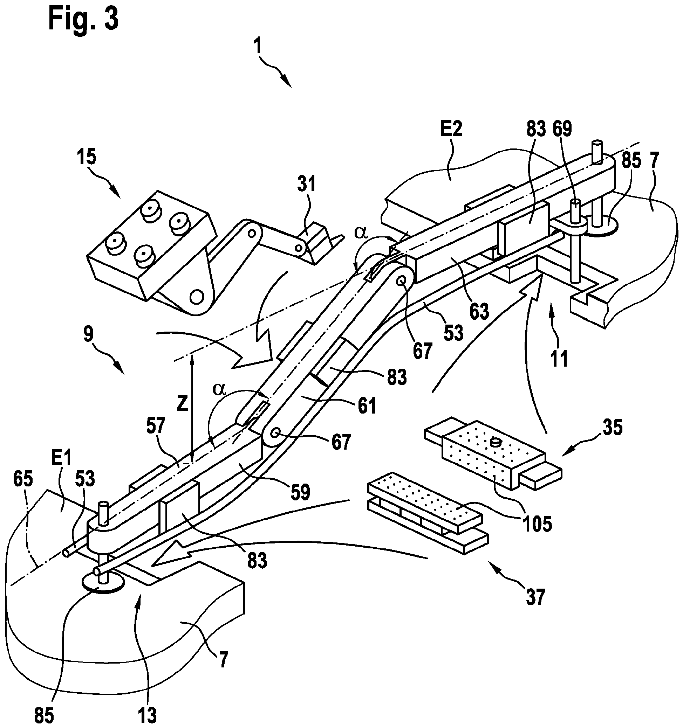

Die Figur 3 zeigt eine weitere mögliche Ausgestaltung der Druckervorrichtung 1. Wiederum sind zwei Etagen E1, E2 des Bauwerkes 7 dargestellt. An jeder dieser Etagen E1, E2 ist eine Auflagerstelle 11, 13 ausgebildet. Zwischen den beiden Auflagerstellen 13, 11 ist eine Druckerführungsvorrichtung 9 der Druckervorrichtung 1 angeordnet. Die Druckerführungsvorrichtung 9 dient zur Führung einer 3D-Betondruckereinrichtung 15, die Teil der Druckervorrichtung 1 ist und bereits ausführlich im Zusammenhang mit der Figur 2 beschrieben wurde. Im Unterschied zur Druckervorrichtung 1 der Figur 2, wird in der Figur 3 die 3D-Betondruckereinrichtung 15 nicht «stehend», sondern «hängend» an der Druckerführungsvorrichtung 9 geführt.

Die Druckerführungsvorrichtung 9 weist drei Abschnitte 59, 61, 63 auf. Der erste Abschnitt 59 weist eine Stütze 85 auf, welche auf der Etage E1 angeordnet ist. Der dritte Abschnitt 63 weist ebenso eine Stütze 85 auf, die auf der zweiten Etage E2 des Bauwerkes 7 abgestützt ist. Der erste Abschnitt 59 und der dritte Abschnitt 63 sind mittels des zweiten Abschnitts 61 miteinander über Gelenkstellen 67 verbunden. Dadurch lässt sich der Niveauunterschied zwischen der Etage E1 und der Etage E2 an der Druckerführungsvorrichtung 9 einstellen, wie dies mit dem Höhenmass Z symbolisch dargestellt ist. Wie mittels der Mittellängsachse der Druckerführungsvorrichtung 9 gezeigt wird, ermöglichen die Gelenkstellen 67 eine winklige Einstellung α des zweiten Abschnitts 61 zum dritten Abschnitt 63 und zum ersten Abschnitt 59. Diese durch die Abschnitte 59, 61, 63 und die Gelenkstellen 67 gebildete Tragkonstruktion der Druckerführungsvorrichtung 9 stützt die beiden Führungsbahnen 53, welche mittels Justierträger 83 einstellbar an der Tragkonstruktion 57 befestigt sind.

Des Weiteren weist die Druckerführungsvorrichtung 9 eine Aufnahmevorrichtung 69 auf. Diese Aufnahmevorrichtung 69 dient der temporären Aufnahme von Lagerbauteilen 35, 37. Hierbei ist das Lagerbauteil 35 ein Schwenklager, und das Lagerbauteil 37 ein Gleitlager. Durch das Verbauen der beiden Lagerbauteile 35, 37 kann sich nach der Fertigstellung das Betontragwerk 3 (nicht dargestellt), relativ zu den beiden Etagen E1, E2 bewegen. Um eine gute Verankerung der Lagerbauteile 35, 37 zu erreichen, weisen diese Löcher auf, welche als Anschlussstellen 105 zu Bewehrungsteilen 33 dienen, die von der Bewehrungszuführvorrichtung 31 zugeführt und in diese Anschlussstellen 105 eingeführt werden können.

Wie die Figur 3 unschwer erkennen lässt, ist eine Druckerführungsvorrichtung 9 dargestellt, welche vor dem Druckvorgang aufgebaut wird und dann nach Erstellung des Betontragwerkes 3 komplett demontiert werden kann. Somit verbleibt kein Teil der Druckerführungsvorrichtung 9 als Teil einer Bewehrung im erstellten Betontragwerk 3 zurück.

Die Figur 4 zeigt einen Abschnitt eines Betontragwerkes 3, anhand dessen die Einbringung von Bewehrungsteilen 33 besser erklärt werden soll. Die im verarbeiteten Beton 21 eingelassene, verbaute Bewehrung 29 sind verschieden geführte Bewehrungsdrähte 87, 89, 91. Zum einen verlaufen die Bewehrungsdrähte 87 parallel zur Längserstreckung des Betontragwerkes 3. In orthogonaler Richtung zu diesen Bewehrungsdrähten 87, sind weitere Bewehrungsdrähte 89 im Betontragwerk 3 angeordnet, welche die längsverlaufenden Bewehrungsdrähte 87 miteinander verbinden. Um Scherbeanspruchungen besser aufnehmen zu können, werden zudem während des Druckvorganges diagonal verlaufende Bewehrungsdrähte 91 in das Betontragwerk 3 eingebracht.

Um das in der Figur 4 dargestellte Betontragwerk 3 zu erzeugen, kann die in der Figur 1 dargestellte 3D-Betondruckereinrichtung 15 eine Druckerdüse 17 aufweisen, wie sie in der Figur 5 schematisch dargestellt ist. Die Druckerdüse 17 der Figur 5 ist U-förmig aufgebaut, wodurch der U-förmige Querschnitt des Betontragwerkes 3 erzeugt wird. An der U-förmig ausgebildeten Druckerdüse 17 schliesst ein Schlauch der Betonfördereinrichtung 73 an, durch den verarbeitbaren Beton der Druckerdüse 17 zugeführt werden kann. Die Druckerdüse 17 ist hierbei schwenkbar durch zwei Schwenklager 99 gelagert, so dass sie dem durch die Steuerungssoftware 27 (siehe Figur 1) vorgegebenen Druckvorgang 77 folgend, verschwenkt werden kann.

Wie in der Figur 4 beispielhaft dargestellt ist, werden durch die Druckerdüse 17 die Bewehrungsdrähte 87 zugeführt, welche parallel zur Längserstreckung im Betontragwerk 3 verbaut werden sollen. Diese Bewehrungsdrähte 87 werden mittels Drahtführungen 93 der ansonsten nicht dargestellten Bewehrungszuführvorrichtung 31 zugeführt. Hierbei durchragen die Bewehrungsdrähte 87 die Druckerdüse 17 an ihrer Vorderseite 107 und treten zusammen mit der von der Betonfördereinrichtung 73 zugeführten verarbeitbaren Betonmasse an der Rückseite 109 der Druckerdüse 17 aus dieser heraus und bilden dem Druckvorgang 77 folgend, das Betontragwerk 3. Aufgrund der U-förmigen Ausgestaltung der Druckerdüse 17 können während des Druckvorganges 77 kontinuierlich glattgestrichene Oberflächen am entstehenden Betontragwerk 3 erzeugt werden, so dass keine Nacharbeit der Oberflächen erforderlich ist. Allerdings schränkt eine solche Ausgestaltung der Druckerdüse 17 die Gestaltungsfreiheit der Oberflächen und insbesondere des Querschnittes des Betontragwerkes 3 ein.

Die Figur 6 zeigt schematisch eine mögliche Zuführeinheit 95 für Bewehrungsdrähte 89, die orthogonal zu den in Längsrichtung eingebrachten Bewehrungsdrähten 87 angeordnet werden sollen. Hierbei umläuft die Zuführeinheit 95 beispielsweise den U-förmigen Querschnitt periodisch und spult den Bewehrungsdraht 89 um die in Längsrichtung eingebrachten Bewehrungsdrähte 87.

Obwohl die Figuren 1 bis 6 unterschiedliche Aspekte der vorliegenden Erfindung anhand eines zu erstellenden Betontragwerkes 3 zeigen, welches vertikal voneinander beabstandete Etagen E1, E2 miteinander verbinden soll, ist es offensichtlich, dass die beschriebenen Verfahrensschritte und eine entsprechende Vorrichtung gleichermaßen auch für auf einer Ebene anzuordnende Betontragwerke Anwendung finden, wie sie beispielsweise für Fahrsteige verwendet werden. Zudem kann die Druckervorrichtung 1 weitere Funktionseinheiten wie beispielsweise eine Vorrichtung zum Glätten von Oberflächen aufweisen, mittels der der die Oberflächen des noch nicht abgebundenen, verarbeiteten Betons 21 des Betontragwerkes 3 bearbeitet werden können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern die im Schutzumfang der Erfindung liegt, welcher nur durch die beigefügten Ansprüche definiert wird. Bezugszeichen in den Ansprüchen sind nicht als Einschränkung anzusehen.

## Patentansprüche

1. Druckervorrichtung (1) zur Erstellung eines Betontragwerkes (3) einer als Fahrtreppe oder Fahrsteig ausgestalteten Personentransportanlage (5) in einem bestehenden Bauwerk (7), wobei die Druckervorrichtung (1) zumindest die folgenden Komponenten aufweist:
• eine Druckerführungsvorrichtung (9), die zwischen zwei zur Abstützung der Personentransportanlage (5) vorgesehenen Auflagerstellen (11, 13) des Bauwerkes (7) angeordnet werden kann, wobei die Druckerführungsvorrichtung (9) dazu ausgebildet ist, zumindest während des Druckvorganges (77) an den mit der Personentransportanlage (5) zu verbindenden Etagen (E1, E2) des Bauwerkes (7) abzustützen;
• eine 3D-Betondruckereinrichtung (15), die entlang der Druckerführungsvorrichtung (9) bewegbar geführt an dieser angeordnet ist und dazu ausgestaltet ist, verarbeitbaren Beton (19) räumlich anzuordnen, wobei die 3D-Betondruckereinrichtung (15) zumindest eine Druckerdüse (17), eine Bewegungsvorrichtung (23) zum Bewegen der Druckerdüse (17) sowie eine Druckersteuerung (25) beinhaltet, durch welche Druckersteuerung (25) die Bewegungsvorrichtung (23), die Betonzufuhr durch die Druckerdüse (17) sowie die Bewegungen der ganzen 3D-Betondruckereinrichtung (15) entlang der Druckerführungsvorrichtung (9) steuerbar sind; und
• eine Steuerungssoftware (27), ausführbar auf der Druckersteuerung (25) zur Durchführung des Druckvorganges (77) während der Erstellung des Betontragwerkes (3);
wobei die Druckerführungsvorrichtung (9) zumindest eine Führungsbahn (53) aufweist, deren Führungsweg (55) in Bezug auf seine räumliche Einsatzlage, zumindest in vertikaler Richtung einstellbar ist, wobei die Druckerführungsvorrichtung (9) eine Tragkonstruktion (57) aufweist, an der die zumindest eine Führungsbahn (53) angeordnet und/oder ausgebildet ist und die Einstellung der Führungsbahn (53) mittels der Einstellung der Tragkonstruktion (57) erfolgt, **dadurch gekennzeichnet, dass** die Tragkonstruktion (57) zur Einstellung der Führungsbahn zumindest zwei seriell miteinander verbundene Abschnitte (59, 61, 63) umfasst, deren Mittellängsachsen (65) winklig zueinander einstellbar sind.

2. Druckervorrichtung (1) nach Anspruch 1, wobei die Führungsbahn (53) relativ zur Tragkonstruktion (57) justierbar ist.

3. Druckervorrichtung (1) nach einem der Ansprüche 1 bis 2, wobei zur Einstellung eine fixierbare Gelenkstelle (67) jeweils zwischen zwei Abschnitten (59, 61, 63) der Tragkonstruktion (57) angeordnet ist.

4. Druckervorrichtung (1) nach einem der Ansprüche 1 bis 2, wobei zur Einstellung mindestens ein Winkelsegment (97) jeweils zwischen zwei Abschnitten (59, 61, 63) der Tragkonstruktion (57) angeordnet ist.

5. Druckervorrichtung (1) nach einem der Ansprüche 1 bis 4, wobei zumindest Teile der Druckerführungsvorrichtung (9) als Bewehrung (29) oder Teil der Bewehrung (29) des Betontragwerkes (3) vorgesehen sind.

6. Druckervorrichtung (1) nach Anspruch 5 wobei der im Betontragwerk (3) verbleibende Teil der Druckerführungsvorrichtung (9) mindestens eine Anschlussstelle (105) zur Aufnahme von weiterem Bewehrungsmaterial (33) aufweist.

7. Druckervorrichtung (1) nach einem der Ansprüche 1 bis 6, wobei die Druckerführungsvorrichtung (9) zumindest an einem ihren beiden Enden Aufnahmevorrichtungen (69) für Lagerbauteile (35, 37) aufweist.

8. Druckervorrichtung (1) nach Anspruch 7, wobei die Aufnahmevorrichtung (69) relativ zur Druckerführungsvorrichtung (9) bewegbar und an dieser feststellbar angeordnet ist, damit die darin aufgenommenen Lagerbauteile (35, 37) auf die jeweilige Auflagerstelle (11, 13) ausrichtbar sind.

9. Druckervorrichtung (1) nach einem der Ansprüche 1 bis 8, wobei durch den Druckvorgang (77) und gegebenenfalls unter Einbezug von Lagerbauteilen (35, 37) an einer der beiden Auflagerstellen (11, 13) ein Schwenklager (35) und an der anderen Auflagerstelle ein Gleitlager (37) während des Druckvorganges (77) zwischen dem Betontragwerk (3) und der jeweiligen Auflagerstelle (11, 13) ausbildbar ist.

## Claims

1. Printer device (1) for constructing a concrete supporting structure (3) for a passenger transport system (5) designed as an escalator or moving walkway in an existing building (7), the printer device (1) comprising at least the following components:
• a printer guide device (9) which can be arranged between two support points (11, 13) of the building (7) that are provided for supporting the passenger transport system (5), the printer guide device (9) being designed to be supported on the floors (E1, E2) of the building (7) that are to be connected by the passenger transport system (5), at least during the printing process (77);
• a 3D concrete printer apparatus (15) which is arranged on the printer guide device (9) so as to be movably guided along said device and is designed to spatially arrange workable concrete (19), the 3D concrete printer device (15) comprising at least one printer nozzle (17), a movement device (23) for moving the printer nozzle (17) and a printer controller (25), by means of which printer controller (25) the movement device (23), the concrete supply through the printer nozzle (17) and the movements of the entire 3D concrete printer device (15) along the printer guide device (9) can be controlled; and
• control software (27) which can be executed on the printer controller (25) in order to carry out the printing process (77) during the construction of the concrete supporting structure (3);
the printer guide device (9) comprising at least one guide track (53), the guide path (55) of which is adjustable with respect to its spatial use position, at least in the vertical direction, wherein the printer guide device (9) comprises a support structure (57) on which the at least one guide track (53) is arranged and/or formed, and the guide path (53) being adjusted by means of adjustment of the support structure (57), **characterized in that** the support structure (57) comprises at least two portions (59, 61, 63) connected in series with one another for adjusting the guide track, the central longitudinal axes (65) of which portions are adjustable at an angle to one another.

2. Printer device (1) according to claim 1, wherein the guide track (53) is adjustable relative to the support structure (57).

3. Printer device (1) according to any of claims 1 to 2, wherein, for the purpose of adjustment, a fixable hinge point (67) is arranged in each case between two portions (59, 61, 63) of the support structure (57).

4. Printer device (1) according to any of claims 1 to 2, wherein, for the purpose of adjustment, at least one angular segment (97) is arranged in each case between two portions (59, 61, 63) of the support structure (57).

5. Printer device (1) according to any of claims 1 to 4, wherein at least parts of the printer guide device (9) are provided as reinforcement (29) or part of the reinforcement (29) of the concrete supporting structure (3).

6. Printer device (1) according to claim 5, wherein the part of the printer guide device (9) remaining in the concrete supporting structure (3) has at least one connection point (105) for receiving further reinforcement material (33).

7. Printer device (1) according to any of claims 1 to 6, wherein the printer guide device (9) has receiving devices (69) for bearing components (35, 37) at at least one of its two ends.

8. Printer device (1) according to claim 7, wherein the receiving device (69) is movable relative to the printer guide device (9) and is arranged thereon in a fixable manner so that the bearing components (35, 37) received in said receiving device can be aligned with the relevant support point (11, 13).

9. Printer device (1) according to any of claims 1 to 8, wherein by means of the printing process (77) and optionally with the inclusion of bearing components (35, 37), a pivot bearing (35) can be formed at one of the two support points (11, 13) and a slide bearing (37) can be formed at the other support point, between the concrete supporting structure (3) and the relevant support point (11, 13), during the printing process (77).

## Revendications

1. Dispositif formant imprimante (1) permettant la production d'une structure porteuse en béton (3) d'une installation de transport de personnes (5) conçue sous forme d'escalier roulant ou de trottoir roulant dans une construction (7) existante, dans lequel le dispositif formant imprimante (1) présente au moins les composants suivants :
• un dispositif de guidage d'imprimante (9) qui peut être disposé entre deux points d'appui (11, 13) de la construction (7) prévus pour le soutien de l'installation de transport de personnes (5), dans lequel le dispositif de guidage d'imprimante (9) est conçu pour être soutenu, au moins pendant le processus d'impression (77), sur les étages (E1, E2) de la construction (7) à relier à l'installation de transport de personnes (5) ;
• un appareil formant imprimante 3D béton (15) qui est disposé de manière à pouvoir être déplacé et guidé le long du dispositif de guidage d'imprimante (9) et est conçu pour disposer du béton transformable (19) dans l'espace, dans lequel l'appareil formant imprimante 3D béton (15) comporte au moins une buse d'imprimante (17), un dispositif de déplacement (23) permettant de déplacer la buse d'imprimante (17) ainsi qu'une commande d'imprimante (25) au moyen de laquelle commande d'imprimante (25) le dispositif de déplacement (23), l'alimentation en béton à travers la buse d'imprimante (17) ainsi que les mouvements de l'ensemble de l'appareil formant imprimante 3D béton (15) peuvent être commandés le long du dispositif de guidage d'imprimante (9) ; et
• un logiciel de commande (27) pouvant s'exécuter sur la commande d'imprimante (25) pour la mise en oeuvre du processus d'impression (77) pendant la production de la structure porteuse en béton (3) ;
dans lequel le dispositif de guidage d'imprimante (9) présente au moins une glissière de guidage (53) dont le chemin de guidage (55) est réglable au moins dans un sens vertical par rapport à sa position d'utilisation dans l'espace, dans lequel le dispositif de guidage d'imprimante (9) présente une ossature porteuse (57) sur laquelle l'au moins une glissière de guidage (53) est disposée et/ou réalisée et le réglage de la glissière de guidage (53) est effectué au moyen du réglage de l'ossature porteuse (57), **caractérisé en ce que** l'ossature porteuse (57), comprend, pour le réglage de la glissière de guidage, au moins deux sections (59, 61, 63) reliées entre elles en série, dont les axes longitudinaux médians (65) sont réglables de manière angulaire les uns par rapport aux autres.

2. Dispositif formant imprimante (1) selon la revendication 1, dans lequel la glissière de guidage (53) est ajustable par rapport à l'ossature porteuse (57).

3. Dispositif formant imprimante (1) selon l'une des revendications 1 à 2, dans lequel un point d'articulation (67) pouvant être fixé est disposé respectivement entre deux sections (59, 61, 63) de l'ossature porteuse (57) pour le réglage.

4. Dispositif formant imprimante (1) selon l'une des revendications 1 à 2, dans lequel au moins un segment angulaire (97) est disposé respectivement entre deux sections (59, 61, 63) de l'ossature porteuse (57) pour le réglage.

5. Dispositif formant imprimante (1) selon l'une des revendications 1 à 4, dans lequel au moins des parties du dispositif de guidage d'imprimante (9) sont prévues comme armature (29) ou partie de l'armature (29) de la structure porteuse en béton (3).

6. Dispositif formant imprimante (1) selon la revendication 5, dans lequel la partie du dispositif de guidage d'imprimante (9) qui reste dans la structure porteuse en béton (3) présente au moins un point de raccordement (105) permettant de recevoir du matériau d'armature (33) supplémentaire.

7. Dispositif formant imprimante (1) selon l'une des revendications 1 à 6, dans lequel le dispositif de guidage d'imprimante (9) présente, au moins au niveau de l'une de ses deux extrémités, des dispositifs de réception (69) pour des pièces de palier (35, 37).

8. Dispositif formant imprimante (1) selon la revendication 7, dans lequel le dispositif de réception (69) est disposé de manière à pouvoir être déplacé par rapport au dispositif de guidage d'imprimante (9) et être fixé sur celui-ci afin que les pièces de palier (35, 37) qui y sont reçues puissent être alignées sur les points d'appui (11, 13) respectifs.

9. Dispositif formant imprimante (1) selon l'une des revendications 1 à 8, dans lequel, au moyen du processus d'impression (77) et éventuellement en utilisant des pièces de palier (35, 37), un palier de pivotement (35) peut être formé au niveau de l'un des deux points d'appui (11, 13) et un palier lisse (37) peut être formé au niveau de l'autre point d'appui pendant le processus d'impression (77) entre la structure porteuse en béton (3) et le point d'appui (11, 13) respectif.
